# EUROPÄISCHE PATENTSCHRIFT

(11) **EP 2 205 842 B1**
(45) Veröffentlichungstag und Bekanntmachung des Hinweises auf die Patenterteilung: **09.03.2011**
(21) Anmeldenummer: 08804726.1
(22) Anmeldetag: 25.09.2008
(51) Int. Cl.: F02B 37/007

(54) **VERDICHTERZUSCHALTVENTIL UND REGISTERAUFLADEEINRICHTUNG MIT EINEM SOLCHEN VERDICHTERZUSCHALTVENTIL**
COMPRESSOR SEQUENCE VALVE AND REGISTER CHARGING UNIT HAVING SUCH COMPRESSOR SEQUENCE VALVE
SOUPAPE DE BRANCHEMENT DE COMPRESSEUR ET DISPOSITIF DE SURALIMENTATION À REGISTRE DOTÉ D'UNE TELLE SOUPAPE DE BRANCHEMENT DE COMPRESSEUR

(30) Priorität: 25.10.2007 DE 102007050986
(43) Veröffentlichungstag der Anmeldung: 14.07.2010
(73) Patentinhaber: Robert Bosch GmbH, 70442 Stuttgart (DE)
(72) Erfinder: VOGT, Guenther, 83607 Holzkirchen (DE); HAMMER, Uwe, 83734 Hausham (DE)
(86) Internationale Anmeldenummer: PCT/EP2008/062828
(87) Internationale Veröffentlichungsnummer: WO 2009/053206

(56) Entgegenhaltungen:
- EP-A- 1 215 378
- WO-A-90/01112
- WO-A-2004/046519
- WO-A-2006/121745
- DE-A1- 4 310 148
- DE-C1- 3 704 967
- JP-A- 4 088 271
- US-A- 2 359 615

## Beschreibung

### Stand der Technik

Die Erfindung betrifft ein Verdichterzuschaltventil mit einem Gehäuse, das einen ersten Einlassbereich, einen zweiten Einlassbereich und einen mit dem ersten Einlassbereich und dem zweiten Einlassbereich strömungsleitend verbundenen Auslassbereich. Sie betrifft auch eine Registeraufladeeinrichtung zur Verdichtung von Ladeluft, die einem Verbrennungsmotor zugeführt ist, mit einer ersten Registerstufe, die einen ersten Verdichter aufweist, mit einer zweiten Registerstufe, die einen zweiten Verdichter aufweist, wobei der erste Verdichter und der zweite Verdichter parallel über einer Ladeluftleitung mit Ladeluft beaufschlagbar ist, und mit einer Bypassleitung, die eine luftführende Verbindung zwischen einer strömungsabwärtigen Abzweigstelle hinter dem ersten Verdichter zu einer strömungsvorgelagerten Zuleitungsstelle vor dem zweiten Verdichter herstellt.

Aus dem Stand der Technik ist bekannt, Verbrennungsmotoren mithilfe von Turboladern aufzuladen. Um die Effizienz dieser Aufladung vor allem im unteren Lastbereich zu verbessern, wird häufig mit zwei Turboladern gearbeitet. Hierbei haben sich eine sog. geregelte zweistufige Aufladung und eine Registeraufladung bewährt.

Allerdings ist die zum Ermöglichen einer Registeraufladung notwendige Registeraufladeeinrichtung wegen des notwendigen zeitlich versetzten Zuschaltens eines zweiten Turboladers problematisch. Ein Zuschalten des zweiten Turboladers zeitlich versetzt zu dem Anlaufen eines ersten Turboladers ist notwendig, um ein Pumpen des zweiten Verdichters, der Teil des zweiten Turboladers ist, zu verhindern. Aus dem Stand der Technik ist eine Registeraufladeeinrichtung bekannt, die eine erste Registerstufe mit einem ersten Verdichter aufweist und eine zweite Registerstufe mit einem zweiten Verdichter aufweist. Die erste Registerstufe bildet dabei einen ersten Turbolader, wobei die zweite Registerstufe einen zweiten Turbolader bildet. Eine solche Registeraufladeeinrichtung ist aus der noch nicht veröffentlichten Patentanmeldung mit dem Anmeldetag vom 22.12.2006 und dem Aktenzeichen DE 10 2006061345.7 bekannt. Diese noch nicht veröffentlichte Patentanmeldung nimmt die Priorität vom 26.10.2006 in Anspruch.

Aus dieser Patentanmeldung ist bekannt, dass Ladeluft durch einen Luftfilter zu einem ersten Verdichter einer ersten Registerstufe und parallel dazu zu einem zweiten Verdichter einer zweiten Registerstufe führbar ist. Stromaufwärts vor dem zweiten Verdichter, also strömungsvorgelagert, ist dabei ein Verdichterzuschaltventil angeordnet. Die Ladeluft, die dem ersten Verdichter zugeführt wird, wird dort verdichtet und einem Ladeluftkühler weitergeleitet. Die komprimierte Ladeluft wird dort abgekühlt und großteils durch eine Drosseleinrichtung einem Verbrennungsmotor zugeleitet. Ein Teil der gekühlten komprimierten Ladeluft wird über eine Zuleitung, die auch als Bypassleitung bezeichnet ist, an eine Zuleitungsstelle zwischen dem Verdichterzuschaltventil und dem zweiten Verdichter geleitet. Dabei ist in der Bypassleitung zwischen einer Abzweigstelle, die zwischen dem Ladeluftkühler und der Drosseleinrichtung befindlich ist, und der Zuleitungsstelle ein Umblaseventil angeordnet.

Von einem Abgaskrümmer gelangt Abgas stromabwärts von dem Verbrennungsmotor zu dem ersten und zweiten Turbolader. Um eine bessere Dynamik zu erreichen, ist bei kleinen Drehzahlen und Lasten ein hinter dem zweiten Turbolader angeordnetes Turbinenzuschaltventil geschlossen, so dass durch die zweite Turbine der zweiten Registerstufe kein Abgas strömen kann. Die gesamte Abgasmenge strömt durch die erste Turbine der ersten Registerstufe.

Die erste Turbine treibt dabei den ersten Verdichter des ersten Turboladers an, wodurch Luft, welche über einen Luftfilter angesaugt wird, verdichtet wird und über den Ladeluftkühler und die Drosseleinrichtung, die als Drosselklappe ausgebildet ist, in den Brennraum des Verbrennungsmotors gelangt.

Bei steigender Last und Drehzahl erhöht sich die Abgasmenge. Bei Erreichen einer bestimmten Abgasmenge reicht die Baugröße der ersten Turbine des ersten Turboladers nicht mehr aus. Es wird dann das Turbinenzuschaltventil geöffnet, so dass auch Abgas über die zweite Turbine strömen kann und diese angetrieben wird.

Ab diesem Zeitpunkt könnte auch durch den zweiten Verdichter Luft verdichtet werden, da der zweite Verdichter über eine mechanische Verbindung, wie eine Welle mit der zweiten Turbine des zweiten Turboladers gekoppelt ist. Problematisch ist jedoch, dass der zweite Verdichter bei einem bestimmten Differenzdruck eine bestimmte Fördermasse nicht unterschreiten darf, da der zweite Verdichter ansonsten zu pumpen beginnt. Der erste Verdichter der ersten Registerstufe hat bereits einen Druck erzeugt und die beiden Registerstufen sind miteinander verbunden. Es liegt daher auf der stromabwärtigen Seite des zweiten Verdichters bereits der Druck an, der durch die erste Verdichterstufe erzeugt wird. Dies ist auch dann der Fall, wenn der zweite Verdichter noch nicht angefangen hat sich zu drehen und auch noch keine Luft fördern kann. Ein Rückschlagventil ermöglicht, dass bei alleinigem Betrieb der ersten Registerstufe überhaupt ein Ladedruck aufgebaut werden kann.

Um ein Zuschalten der zweiten Registerstufe zu ermöglichen, ist bei Förderbeginn des zweiten Verdichters das erwähnte Umblaseventil geöffnet, so dass der zweite Verdichter über eine Drossel und den Ladeluftkühler im Kreis fördern kann. Dabei ist das Rückschlagventil weiterhin geschlossen. Die Drossel ist dabei so ausgelegt, dass ihr Druckverlust in Abhängigkeit von der durchströmenden Luftmasse gerade so groß ist, dass der zweite Verdichter nicht ins Pumpen gerät.

Infolge der Drehung eines Verdichterrades des zweiten Verdichters erhöht sich der Druck stromabwärts von dem zweiten Verdichter. Da die Energie durch die Drossel vernichtet wird, bleibt der Druck vor dem zweiten Verdichter gleich.

Sobald der Druck nach dem zweiten Verdichter gleich groß ist, wie der vom ersten Verdichter der ersten Registerstufe erzeugte Druck, sinkt der Druck vor dem zweiten Verdichter ab, wobei sich dann das Rückschlagventil öffnet. Erst dann kann Luft vom Luftfilter direkt zum zweiten Verdichter gelangen. Der zweite Verdichter beginnt dann Luft in einen Brennraum des Verbrennungsmotors zu fördern. Gleichzeitig schließt das vom Druck vor dem zweiten Verdichter gesteuerte Umblaseventil sich, so dass der zweite Verdichter keine Luft mehr im Kreis fördert.

### Offenbarung der Erfindung

Um das Schließen des Umblaseventils in der Bypassleitung besser mit dem Öffnen des Rückschlagventils in der Ladeluftleitung aufeinander abzustimmen, so dass ein gleichmäßiger Ladeluftdruckanstieg bei zunehmender Last und Drehzahl des Verbrennungsmotors erzeugt wird, steht ein erstes Verschlusselement zum Öffnen und/oder Verschließen des ersten Einlassbereiches mit einem zweiten Verschlusselement zum Öffnen und/oder Verschließen des zweiten Einlassbereiches so in Wirkzusammenhang, dass ein Öffnen des ersten Verschlusselementes ein Verschließen durch das zweite Verschlusselement bewirkt.

Bei einer Registeraufladeeinrichtung wird dies erfindungsgemäß dadurch erreicht, dass im Bereich der Zuleitungsstelle in der Ladeluftleitung ein Verdichterzuschaltventil nach erfindungsgemäßer Art zum Öffnen und Verschließen von sowohl der Ladeluftleitung als auch der Bypassleitung angeordnet ist.

Wenn in einer erfindungsgemäßen Ausführungsform das Verdichterzuschaltventil eine Ventilscheibe zum Öffnen und zum Schließen eines ersten Einlassbereichs, der vorzugsweise die Ladeluftleitung aufnimmt, an einen Ventilring bewegungsübertragend angekoppelt aufweist, wobei der zweite Einlassbereich mittels dem Ventilring öffnenbar und verschließbar ist, so wird eine Abstimmung des Öffnens der Ladeluftleitung und Verschließen der Bypassleitung besonders einfach realisierbar. Dies führt zu einer ruckelfreien Funktion der Registeraufladung, was für den Betrieb des Verbrennungsmotors von besonderer Bedeutung ist.

Durch das erfindungsgemäße Verdichterzuschaltventil wird es möglich, das Umblaseventil in das Rückschlagventil zu integrieren, wodurch auf ein Bauteil verzichtet werden kann. Durch eine derartige Ausgestaltung wird eine selbstständige Regelung des Zuschaltvorganges der zweiten Registerstufe ermöglicht, ohne dass der zweite Verdichter zu pumpen anfängt. Hierdurch kann der Aufwand an mechanischen Stellelemente, elektronischen Bauteilen, an Software sowie an sonstigen Applikationen verringert werden. Durch die einteilige Ausführung des Verdichterzuschaltventils, das ein konventionelles Umblaseventil und ein konventionelles Rückschlagventil ersetzt, kann die Bewegung beim Öffnen eines das Rückschlagventil ersetzenden Bauteils zum Verschließen des Bypasses genutzt werden. Dies entspricht dann einem Schalten eines konventionellen Umblasventiles. Dies hat dann den Vorteil, dass Bauteile und somit Kosten und Bauraum eingespart wird.

Im Folgenden werden vorteilhafte Ausführungsformen näher beschrieben und anschließend beansprucht.

Um die Bypassleitung komplett verschließen zu können, bevor die Ladeluftleitung komplett geöffnet ist, ist es von besonderem Vorteil in einer weiteren Ausführungsform, wenn der Ventilring relativ zu der Ventilscheibe beweglich gelagert ist. Durch die Kontur der Ventilscheibe ist der Öffnungsvorgang der Ladeluftleitung so verzögerbar, dass nur sehr wenig Frischluft zugeführt ist, bevor der Ventilring die Bypassleitung komplett verschlossen hat. Der Druck vor dem zweiten Verdichter bleibt dann nahezu konstant.

Wenn die Ventilscheibe mittels eines fest mit der Ventilscheibe verbundenen Führungselements relativ zu einem Lager gleitend gelagert ist, so lässt sich durch eine geeignete Materialwahl der aufeinander gleitenden Teile eine lange Lebensdauer des Verdichterzuschaltventils erreichen.

In einem weiteren vorteilhaften Ausführungsbeispiel ist das Führungselement ein integraler Vorsprung der Ventilscheibe oder eine separate Achse. In diesen speziellen Ausführungsformen ist das Verdichterzuschaltventil dann besonders einfach herstellbar.

Wenn eine erste Federkraftübertragung mit einer Innenseite der Ventilscheibe in Anlage befindlich ist und/oder eine zweite Federkraftübertragung mit dem Ventilring in Anlage befindlich ist, so lässt sich dabei mit bekannten und einfach aufgebauten Bauteilen eine komplexe Kinematik realisieren. Mit geringen Kosten lässt sich das Schließen der Bypassleitung in Antwort auf das Öffnen der Ladeluftleitung zeitlich koordinieren.

In einer ersten vorteilhaften Ausführungsform hat es sich dabei als besonders effizient herausgestellt, wenn die erste Feder zwischen der Ventilscheibe und dem Gehäuse angeordnet ist und die zweite Feder zwischen einem das Führungselement lagernden Lager und dem Ventilring angeordnet ist. Das Lager ist dabei ortsfest mit dem Gehäuse verbunden, so dass die Kompression der ersten Feder eine Dekompression der zweiten Feder nach sich zieht, da ein Absatz an dem Führungselement durch Verschieben der Ventilscheibe in Richtung des zweiten Verdichters ein Verschieben des Ventilrings in Richtung des zweiten Verdichters ermöglicht.

In einer alterntiven Ausführungsform hat sich es als besonders vorteilhaft erwiesen, wenn die erste Feder zwischen der Ventilscheibe und dem Ventilring angeordnet ist und die zweite Feder zwischen dem Ventilring und dem Gehäuse angeordnet ist. In dieser zweiten Ausführungsform ist dabei der Ventilring relativ zum Gehäuse und relativ zur Ventilscheibe beweglich als Trennung zwischen der ersten und zweiten Feder angeordnet. Dies ermöglicht einen besonders robusten Aufbau des Verdichterzuschaltventils. Wenn die erste Feder eine größere Federstärke aufweist als die zweite Feder, so bewegt sich die linke Scheibe erst dann in eine Öffnungsposition für die Bypassleitung, wenn die Ventilscheibe wieder geschlossen ist. Dadurch wird bei sich verringernder Leistung oder verringernder Drehzahl wiederum ein gleichmäßiger Druckabfall ermöglicht.

Um ein selbsttätiges Aktivieren des Öffnens und/oder Schließens von der Ladeluftleitung und der Bypassleitung in Abhängigkeit der jeweiligen Bewegungen zu ermöglichen, ist es von besonderem Vorteil, wenn eine Bewegung der Ventilscheibe eine Bewegung des Ventilringes erzwingt. Es kann in diesem Ausführungsbeispiel auf Zusatzregeleinrichtungen, sei es elektronischer oder mechanischer Art, verzichtet werden.

### Kurze Beschreibung der Zeichnungen

Nachfolgend wird die Erfindung mit Hilfe einer Zeichnung näher erläutert. Es zeigt dabei
- Figur 1: eine schematische Darstellung einer an einem Verbrennungsmotor ange- schlossenen Registeraufladeeinrichtung gemäß der Erfindung,
- Figur 2: ein erstes Ausführungsbeispiel eines erfindungsgemäßen Verdichterzu- schaltventils, wobei eine Ladeluftleitung verschlossen und eine Bypasslei- tung geöffnet ist,
- Figur 3: eine schematische Querschnittsansicht des erfindungsgemäßen Verdichter- zuschaltventils nach Figur 2, wobei jedoch die Ladeluftleitung geöffnet und die Bypassleitung verschlossen ist und
- Figur 4: eine schematische Querschnittsansicht eines zweiten erfindungsgemäßen Ausführungsbeispiels eines Verdichterzuschaltventils, wobei die Ladeluftlei- tung verschlossen und die Bypassleitung geöffnet ist.

### Ausführungsformen der Erfindung

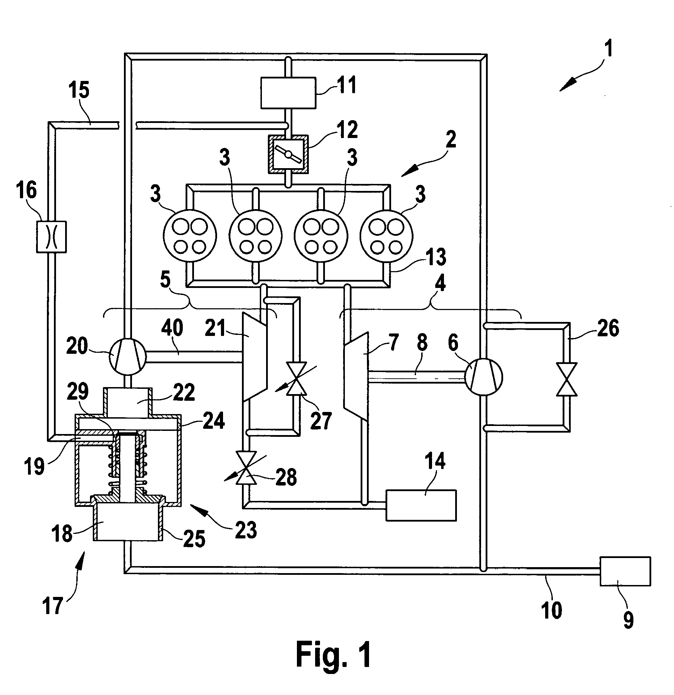

Figur 1 zeigt eine Registeraufladeeinrichtung 1 zur Verdichtung von Ladeluft, die einem Verbrennungsmotor 2 zugeführt ist. In dem dargestellten Ausführungsbeispiel weist der Verbrennungsmotor 2 vier Verbrennungsräume 3 auf.

Die Registeraufladeeinrichtung weist dabei eine erste Registerstufe 4 und eine zweite Registerstufe 5 auf. Die erste Registerstufe 4 ist als erster Turbolader ausgebildet. Die zweite Registerstufe 5 ist als zweiter Turbolader ausgebildet. Die erste Registerstufe 4 weist einen ersten Verdichter 6 und eine erste Turbine 7 auf. Der erste Verdichter 6 ist mit der ersten Turbine 7 über eine erste Welle 8 verbunden. Wird die erste Turbine 7 durch das aus den Verbrennungsräumen 3 strömende Abgas angetrieben, so erfolgt dadurch eine Drehung der ersten Welle 8, die eine Drehung eines Verdichterrades im ersten Verdichter 6 hervorruft. Dies führt zu einer Verdichtung von Ladeluft, die durch den ersten Verdichter 6 geleitet wird. Die Ladeluft wird dabei durch einen Luftfilter 9 angesaugt und durch eine Ladeluftleitung 10 zu dem ersten Verdichter 6 geleitet, bei Betätigung des ersten Verdichters 6 dort verdichtet und zu einem Ladeluftkühler 11 geleitet.

Die komprimierte Luft wird in dem Ladeluftkühler 11 gekühlt und gelangt nach deren Austritt in eine Drosseleinrichtung 12. Die Drosseleinrichtung 12 ist im vorliegenden Ausführungsbeispiel als Drosselklappe ausgebildet. Nach der Drosseleinrichtung 12 gelangt die Ladeluft in die Verbrennungsräume 3. Aus den Verbrennungsräumen 3 tritt Abgas in das Abgassammelrohr 13 ein und wird dann in die erste Turbine 7 geleitet. Dort treibt sie die erste Turbine 7 an und gelangt danach in einen Katalysator 14. Der weitere Verlauf des Abgases ist nicht dargestellt.

Zwischen dem Ladeluftkühler 11 und der Drosseleinrichtung 12, die im otto-motorischen Einsatz relevant ist, ist eine Abzweigstelle vorhanden, wobei von dieser Abzweigstelle eine Bypassleitung 15 wegführt. Durch die Bypassleitung 15 ist Ladeluft zu einer Drossel 16 leitbar. Die Drossel 16 ist als Blende ausführbar. Die Drossel 16 bewirkt eine Entspannung der komprimierten Ladeluft. Die Bypassleitung 15 mündet in ein Verdichterzuschaltventil 17.

Das Verdichterzuschaltventil 17 weist einen ersten Einlassbereich 18 und einen zweiten Einlassbereich 19 auf. Die Bypassleitung 15 endet im zweiten Einlassbereich 19. Die Ladeluftleitung 10 führt einerseits zum ersten Verdichter 6 und andererseits zu einem zweiten Verdichter 20 einer zweiten Registerstufe 5, welche auch eine zweite Turbine 21 umfasst. Die Ladeluftleitung 10 ist am ersten Einlassbereich 18 angeschlossen.

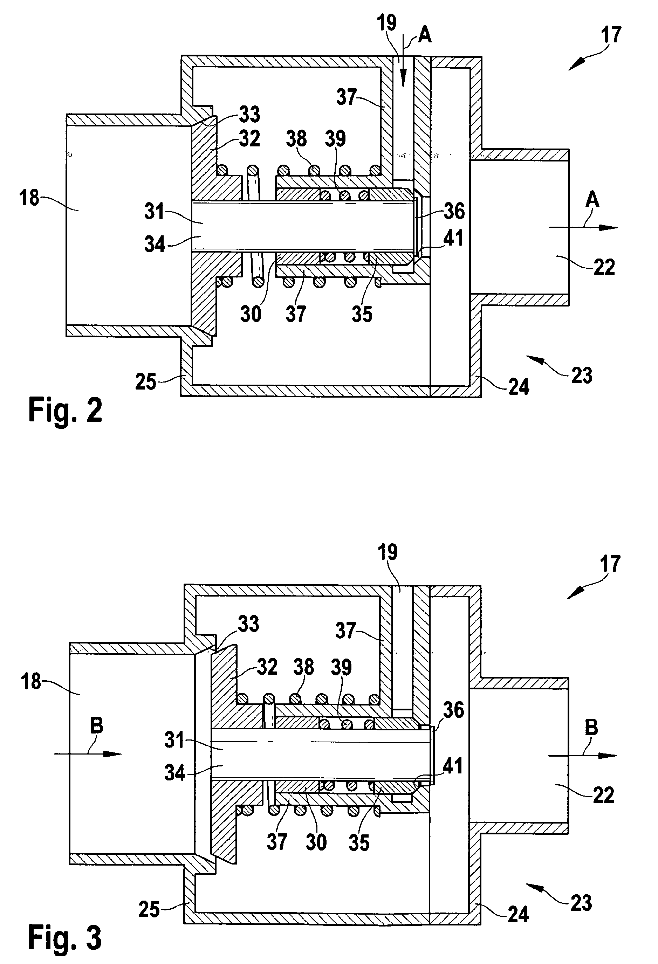

Das Verdichterzuschaltventil 17 unterbricht die Ladeluftleitung 10, die erst danach wieder zum zweiten Verdichter 20 führt. Dabei steht der zweite Verdichter 20 über die Ladeluftleitung 10 mit einem Auslassbereich 22 des Verdichterzuschaltventils 17 in strömungsführender Verbindung. Das Verdichterzuschaltventil 17 weist ein Gehäuse 23 auf. Das Gehäuse 23 ist zweiteilig ausgestaltet. Das Gehäuse 23 weist eine erste Gehäuseschale 24 und eine zweite Gehäuseschale 25 auf. Dies ist besonders gut in den Figuren 2, 3 und 4 erkennbar.

Figur 1 zeigt auch eine Umgehungsleitung 26, die für otto-motorischen Einsatz relevant ist, die den ersten Verdichter 6 strömungsleitend umführt. Ferner zeigt Figur 1 in Strömungsparallelschaltung zur zweiten Turbine 21 ein Waste-Gate-Ventil 27.

Stromabwärts der zweiten Turbine 21, zwischen der zweiten Turbine 21 und dem Katalysator 14, ist ein Turbinenzuschaltventil 28 angeordnet.

Das Verdichterzuschaltventil 17 ist an einer Zuleitungsstelle 29 zwischen dem Luftfilter 9 und dem zweiten Verdichter 20 in der Ladeluftleitung 10 angeordnet.

In den Figuren 2 und 3 ist eine erste Ausführungsform des Verdichterzuschaltventils 17 dargestellt.

Die erste Gehäuseschale 24 des Gehäuses 23 ist dabei auf der stromabwärtigen Seite vom ersten Einlassbereich 18 angeordnet. Die erste Gehäuseschale 24 bildet den zweiten Auslassbereich 22 aus. Die zweite Gehäuseschale 25 umfasst den ersten Einlassbereich 18 und den zweiten Einlassbereich 19. Die Luft aus der Bypassleitung 15 gelangt dabei in den zweiten Einlassbereich 19, wobei Luft aus der Ladeluftleitung 10 in den ersten Einlassbereich 18 gelangt.

Figur 2 zeigt einen ersten Schaltzustand des Verdichterzuschaltventils 17. Im Gehäuse 23, im Bereich der zweiten Gehäuseschale 25 ist ein Lager 30 angeordnet. Das Lager 30 führt eine Achse 31, die auf einer Ventilscheibe 32 aufgebracht ist. Zwischen der Ventilscheibe 32 und der Achse 31 ist eine feste Verbindung vorhanden. Dies kann durch Aufschrumpfen erzeugt werden. Auch Schweißlösungen, Schraublösungen oder andere Verbindungsarten sind jedoch praktikabel. Die Ventilscheibe 32 verschließt einen im Bereich des ersten Einlassbereiches angeordneten Ventilsitz 33. Der Ventilsitz 33 ist als Dichtsitz ausgebildet.

Im dargestellten Ausführungsbeispiel stellt die Achse 31 ein Führungselement 34 dar, auf dem ein Ventilring 35 gleitend angeordnet ist. Die Gleitbewegung in Richtung des Auslassbereiches 22 wird durch einen Absatz 36 verhindert. Zwischen einem Gehäusevorsprung 37 und der Ventilscheibe 32 ist eine erste Feder 38 angeordnet. Die erste Feder 38 ist in Anlage mit dem Gehäusevorsprung 37 und einer Innenseite der Ventilscheibe 32. In Figur 2 ist der Ventilring 35 in einer Stellung dargestellt, in der die Bypassleitung 15 in strömungsleitender Verbindung mit dem Auslassbereich 22 und nachfolgend mit dem zweiten Verdichter 20 steht.

Zwischen dem Ventilring 35 und dem Lager 30 ist eine zweite Feder 39 angeordnet. Die erste Feder 38 weist eine größere Federkraft oder Federspannung auf als die zweite Feder 39.

Die Pfeile A zeigen die Strömungsrichtung der Ladeluft an.

In Figur 3 ist die in Figur 2 dargestellte Ausführungsform dargestellt, wobei jedoch der Strömungsverlauf mithilfe der Pfeile B dargestellt ist. Das Verdichterzuschaltventil 17 ist in einer zweiten Schaltstellung dargestellt, in der der zweite Einlassbereich 19 durch den Ventilring 35 verschlossen ist und der erste Einlassbereich 18 durch den in Richtung des zweiten Verdichters gelegten Verschlusselementes, nämlich der Ventilscheibe 32 geöffnet ist.

In den Figuren sind für dieselben Elemente dieselben Bezugszeichen verwendet worden.

In Figur 3 wird die Ladeluft von dem zweiten Verdichter 20, der über eine in Figur 1 dargestellte zweite Welle 40 durch die zweite Turbine 21 angetrieben wird, verdichtet.

Solange das Druckverhältnis beim zweiten Verdichter 20 geringer ist, als das Druckverhältnis am ersten Verdichter 6, liegt die Ventilscheibe 32 am Ventilsitz 33 der zweiten Gehäuseschale 25 an. Die Achse 31 ist dabei mit der Ventilscheibe 32 verbunden und im Lager 30, welches in dem Gehäusevorsprung 37 aufgenommen ist, gelagert. Die Ventilscheibe 32 und die Achse 31 können auch einteilig ausgeführt sein. Ebenfalls auf der Achse 31 ist der Ventilring 35 geführt. Die zweite Feder 39, die als Druckfeder ausgestaltet ist, drückt den Ventilring 35 nach rechts. So lange die Ventilscheibe 32 auf dem Ventilsitz 33 der zweiten Gehäuseschale 25 anliegt, wird der Ventilring 35 gegen den Absatz 36 der Achse 31 gedrückt. Dies stellt die erste Schaltstelle dar. Um dies zu gewährleisten, muss die durch die erste Feder 38, die auch als Druckfeder ausgelegt ist, erzeugte Federkraft größer als die durch die zweite Feder 39 erzeugte Federkraft sein.

Die Achse 31 kann auch teilweise hohl ausgestaltet sein, um eine Gewichtsreduktion zu ermöglichen, so dass nur wenig bewegte Massen existieren und geschalten werden müssen.

Solange das durch den Ventilring 35 und einen Ventilsitz 41 der zweiten Gehäuseschale 25 gebildete Ventil geöffnet ist, kann der zweite Verdichter 20 über die Drossel 16 im Kreis fördern.

Die Drossel 16 ist dabei so ausgelegt, dass ihr Druckverlust in Abhängigkeit von der durchströmenden Luftmasse gerade so groß ist, dass der zweite Verdichter 20 des zweiten Turboladers nicht ins Pumpen gerät. Infolge der Drehung eines Verdichterrades des zweiten Verdichters 20 erhöht sich der Druck stromabwärts vom zweiten Verdichter 20.

Da die Energie durch die Drossel vernichtet wird, verringert sich der Druck vor dem zweiten Verdichter 20 in Abhängigkeit von der Drehzahl des Verdichterrades im zweiten Verdichter 20. Dabei sinkt der Druck vor dem zweiten Verdichter 20 kontinuierlich bis den Wert in der Bypass-Leitung 10 ab, so dass sich die Ventilscheibe 32 vom Ventilsitz 33 abhebt. Dies führt zu der zweiten Schaltstellung. Nun kann Luft vom Luftfilter 9 zum zweiten Verdichter 20 gelangen. Der zweite Verdichter 20 beginnt deshalb Luft in den Verbrennungsraum 3 zu fördern.

Infolge des Abhebens der Ventilscheibe 32 bewegt sich auch der Absatz 36 der Achse 31. Hierdurch wird der Ventilring 35 durch die zweite Feder 39 nach rechts gedrückt, bis er am Ventilsitz 41 anliegt. Das vom Ventilring 35 und dem Ventilsitz 41 der zweiten Gehäuseschale 24 gebildete Ventil ist gemäß der Schaltstellung 2 geschlossen, wodurch der zweite Verdichter 20 nicht mehr im Kreis fördern kann. Der Verdichter 20 fördert nun Luft von Luftfilter 9 in den Verbrennungsraum 3 und kann somit zur Erhöhung des Ladedrucks beitragen.

Die spezielle konstruktive Ausführung ermöglicht es, dass die Ventilscheibe 32 einen größeren Hub durchführt, als der Ventilring 35. Durch die Auslegung der Geometrie der Ventilsitze 33 und 41 ist es möglich, dass die Ventilscheibe 32 bereits bei einer geringen Fördermenge des zweiten Verdichters 20 einen ausreichend großen Hub macht, so dass das durch den Ventilring 35 und den Ventilsitz 41 gebildete Ventil schnell geschlossen wird.

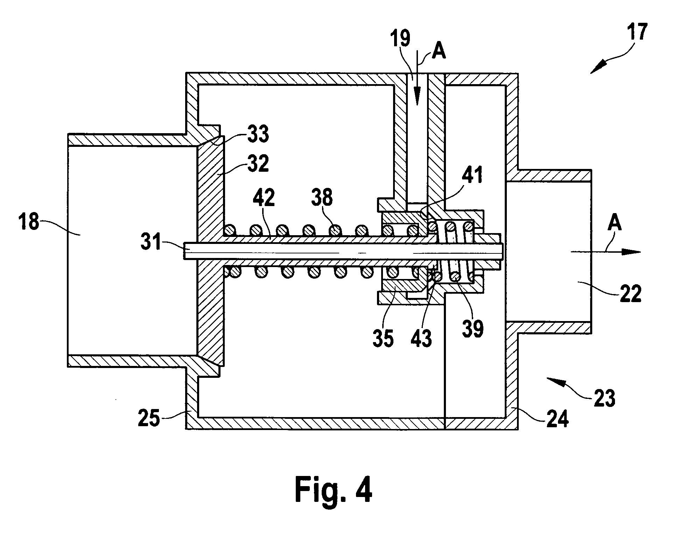

In Figur 4 ist eine zweite Ausführungsform eines Verdichterzuschaltventils 17 in einer ersten Schaltungsstellung dargestellt. Die in Figur 4 gezeigte Variante unterscheidet sich zur ersten Variante dadurch, dass die Achse 31 nicht in der Ventilscheibe 32 sondern in der zweiten Gehäuseschale 25 fest verbunden aufgenommen ist. Die zweite Gehäuseschale 25 selber kann auch mehrteilig ausgeführt sein.

Die Ventilscheibe 32, welche ebenfalls mehrteilig ausführbar ist, ist auf der Achse 31 geführt und mit einer Hülse 42 versehen. Im dargestellten Ausführungsbeispiel ist die Hülse 42 ein integraler Bestandteil der Ventilscheibe 32. Auf der Hülse 42 ist die erste Feder 38 geführt. Der Ventilring 35 ist ebenfalls auf der Hülse 42 geführt und wird durch die Vorspannkraft der ersten Feder 38 an einen Anlagebund 43 gedrückt.

Solange die in Folge der Druckverhältnisse an der Ventilscheibe 32 auftretende Kraft geringer ist, als die Kraft der zweiten Feder 39, liegt die Ventilscheibe 32 am Ventilsitz 33 an. Das Ventil wird dann geschlossen. Die Vorspannkraft der zweiten Feder 39 ist geringer als die Vorspannkraft der ersten Feder 38. Sobald die infolge der Druckverhältnisse an der Ventilscheibe 32 auftretende Kraft größer ist, als die Kraft der zweiten Feder 39, bewegt sich die Ventilscheibe 32 nach rechts. Aufgrund der geringeren Vorspannkraft wird die Feder 39 zusammengedrückt, so dass das durch den Ventilring 35 und den Ventilsitz 41 gebildete Ventil geschlossen wird. Bei einer weiteren Bewegung der Ventilscheibe 32 nach rechts, liegt der Ventilring 35 am Ventilsitz 41 an, so dass die erste Feder 38 zusammengedrückt ist.

In dem zweiten Ausführungsbeispiel gemäß Figur 4 ist die zweite Feder 39 in Strömungsrichtung hinter der ersten Feder 38 angeordnet und nicht wie im ersten Ausführungsbeispiel konzentrisch außerhalb von ihr.

Der Ventilring 35 in Figur 4 ist gegenüber der ersten Gehäuseschale 24, sowie der zweiten Gehäuseschale 25 und der Hülse 42 bewegbar. Der Ventilring 35 ist vorzugsweise aus verschleißresistentem Material gefertigt, so dass Relativbewegungen zur Hülse 42 und zur zweiten Gehäuseschale 25 keine übermäßige Abnutzung zur Folge hat.

Der Luftdurchfluss durch das Verdichterzuschaltventil 17 in der ersten Schaltstellung, wie es in der zweiten Ausführungsform gemäß Figur 4 dargestellt ist, ist durch die Pfeile A angedeutet.

## Patentansprüche

1. Verdichterzuschaltventil (17) mit einem Gehäuse (23), das einen ersten Einlassbereich (18), einen zweiten Einlassbereich (19) und einen mit dem ersten Einlassbereich und dem zweiten Einlassbereich strömungsleitend verbundenen Auslassbereich (22) aufweist, wobei ein erstes Verschlusselement zum Öffnen und/oder Verschließen des ersten Einlassbereiches (18) mit einem zweiten Verschlusselement zum Öffnen und/oder Verschließen des zweiten Einlassbereiches (19), so in Wirkzusammenhang steht, dass ein Öffnen des ersten Verschlusselementes ein Verschließen durch das zweite Verschlusselement bewirkt, **dadurch gekennzeichnet, dass** das Verdichterzuschaltventil (17) eine Ventilscheibe (32) zum Öffnen und Verschließen eines ersten Einlassbereichs (18) an einem Ventilring (35) bewegungsübertragend mechanisch angekoppelt aufweist, wobei der zweite Einlassbereich (19) mittels des Ventilrings (35) öffnenbar und verschließbar ist.

2. Verdichterzuschaltventil (17) nach Anspruch 1, wobei der Ventilring (35) relativ zu der Ventilscheibe (32) beweglich gelagert ist.

3. Verdichterzuschaltventil (17) nach Anspruch 1 oder 2, wobei die Ventilscheibe (32) mittels eines fest mit der Ventilscheibe (32) verbundenen Führungselements (34) relativ zu einem Lager (30) gleitend gelagert ist.

4. Verdichterzuschaltventil (17) nach Anspruch 3, wobei das Führungselement (34) ein integraler Vorsprung der Ventilscheibe (32) oder eine separate Achse (31) ist.

5. Verdichterzuschaltventil (17) nach einem der Ansprüche 1 bis 4, wobei eine erste Feder (38) kraftübertragend mit einer Innenseite der Ventilscheibe (32) in Anlage befindlich ist und/oder eine zweite Feder (39) kraftübertragend mit dem Ventilring (35) in Anlage befindlich ist.

6. Verdichterzuschaltventil (17) nach Anspruch 5, wobei die erste Feder (38) zwischen der Ventilscheibe (32) und dem Gehäuse (23) angeordnet ist und die zweite Feder (39) zwischen dem das Führungselement (34) lagernden Lager (30) und dem Ventilring (35) angeordnet ist.

7. Verdichterzuschaltventil (17) nach Anspruch 5, wobei die erste Feder (38) zwischen der Ventilscheibe (32) und dem Ventilring (35) angeordnet ist und die zweite Feder (39) zwischen dem Ventilring (35) und dem Gehäuse (23) angeordnet ist.

8. Verdichterzuschaltventil (17) nach Anspruch 5 oder 6, wobei die erste Feder (38) eine größere Federstärke aufweist, als die zweite Feder (39).

9. Verdichterzuschaltventil (17) nach einem der Ansprüche 1 bis 8, wobei eine Bewegung der Ventilscheibe (32) eine Bewegung des Ventilringes (35) erzwingt.

10. Registeraufladeeinrichtung (1) zur Verdichtung von Ladeluft, die einem Verbrennungsmotor (2) zugeführt wird, mit einer ersten Registerstufe (4), die einen ersten Verdichter (6) aufweist und mit einer zweiten Registerstufe (5), die einen zweiten Verdichter (20) aufweist, wobei der erste Verdichter (6) und der zweite Verdichter (20) parallel über eine Ladeluftleitung (10) mit Ladeluft beaufschlagbar ist, mit einer Bypassleitung (15), die eine luftführende Verbindung zwischen einer strömungsabwärtigen Abzweigstelle hinter dem ersten Verdichter (20) zu einer strömungsvorgelagerten Zuleitungsstelle (29) vor dem zweiten Verdichter (20) herstellt, wobei im Bereich der Zuleitungsstelle (29) in der Ladeluftleitung (10) ein Verdichterzuschaltventil (17) nach einem der Ansprüche 1 bis 9 zum Öffnen und Verschließen von sowohl der Ladeluftleitung (10) als auch der Bypassleitung (15) angeordnet ist.

## Claims

1. Compressor sequence valve (17) having a housing (23), which has a first inlet region (18), a second inlet region (19) and an outlet region (22) connected in a flow-conducting manner to the first inlet region and the second inlet region, wherein a first closure element for opening and/or closing the first inlet region (18) is operatively connected to a second closure element for opening and/or closing the second inlet region (19) such that opening the first closure element causes the second closure element to close, **characterized in that** the compressor sequence valve (17) has a valve disc (32) for opening and closing a first inlet region (18) in a manner mechanically coupled to a valve ring (35) so as transfer movement, wherein the second inlet region (19) can be opened and closed by means of the valve ring (35).

2. Compressor sequence valve (17) according to Claim 1, wherein the valve ring (35) is mounted in a movable manner relative to the valve disc (32).

3. Compressor sequence valve (17) according to Claim 1 or 2, wherein the valve disc (32) is mounted in a sliding manner relative to a bearing (30) by means of a guide element (34) connected fixedly to the valve disc (32).

4. Compressor sequence valve (17) according to Claim 3, wherein the guide element (34) is an integral protrusion of the valve disc (32) or a separate axle (31).

5. Compressor sequence valve (17) according to one of Claims 1 to 4, wherein a first spring (38) is in abutment in a force-transmitting manner against an inside of the valve disc (32) and/or a second spring (39) is in abutment in a force-transmitting manner against the valve ring (35).

6. Compressor sequence valve (17) according to Claim 5, wherein the first spring (38) is arranged between the valve disc (32) and the housing (23) and the second spring (39) is arranged between the bearing (30) on which the guide element (34) is mounted and the valve ring (35).

7. Compressor sequence valve (17) according to Claim 5, wherein the first spring (38) is arranged between the valve disc (32) and the valve ring (35) and the second spring (39) is arranged between the valve ring (35) and the housing (23).

8. Compressor sequence valve (17) according to Claim 5 or 6, wherein the first spring (38) has a greater spring strength than the second spring (39).

9. Compressor sequence valve (17) according to one of Claims 1 to 8, wherein a movement of the valve disc (32) forces the valve ring (35) to move.

10. Register charging device (1) for compressing charge air which is supplied to an internal combustion engine (2), having a first register stage (4), which has a first compressor (6), and having a second register stage (5), which has a second compressor (20), wherein charge air can be applied to the first compressor (6) and the second compressor (20) in parallel via a charge air line (10), having a bypass line (15), which establishes an air-guiding connection between a downstream branching point after the first compressor (20) and an upstream feed point (29) before the second compressor (20), wherein a compressor sequence valve (17) according to one of Claims 1 to 9 for opening and closing both the charge air line (10) and the bypass line (15) is arranged in the region of the feed point (29) into the charge air line (10).

## Revendications

1. Soupape de branchement de compresseur (17) comprenant un boîtier (23), qui présente une première région d'entrée (18), une deuxième région d'entrée (19) et une région de sortie (22) connectée de manière à conduire l'écoulement à la première région d'entrée et à la deuxième région d'entrée, un premier élément de fermeture pour ouvrir et/ou fermer la première région d'entrée (18) étant en liaison fonctionnelle avec un deuxième élément de fermeture pour ouvrir et/ou fermer la deuxième région d'entrée (19) de telle sorte qu'une ouverture du premier élément de fermeture provoque une fermeture par le deuxième élément de fermeture, **caractérisée en ce que** la soupape de branchement de compresseur (17) présente un disque de soupape (32) pour ouvrir et fermer une première région d'entrée (18) au niveau d'une bague de soupape (35) de manière accouplée mécaniquement pour transférer le mouvement, la deuxième région d'entrée (19) pouvant être ouverte et fermée au moyen de la bague de soupape (35).

2. Soupape de branchement de compresseur (17) selon la revendication 1, dans laquelle la bague de soupape (35) est montée de manière mobile par rapport au disque de soupape (32).

3. Soupape de branchement de compresseur (17) selon la revendication 1 ou 2, dans laquelle le disque de soupape (32) est monté de manière à pouvoir glisser par rapport à un palier (30) au moyen d'un élément de guidage (34) connecté fixement au disque de soupape (32).

4. Soupape de branchement de compresseur (17) selon la revendication 3, dans laquelle l'élément de guidage (34) est une saillie intégrale du disque de soupape (32) ou un axe séparé (31).

5. Soupape de branchement de compresseur (17) selon l'une quelconque des revendications 1 à 4, dans laquelle un premier ressort (38) se trouve en appui avec transfert de force avec un côté intérieur du disque de soupape (32), et/ou un deuxième ressort (39) se trouve en appui avec transfert de force avec la bague de soupape (35).

6. Soupape de branchement de compresseur (17) selon la revendication 5, dans laquelle le premier ressort (38) est disposé entre le disque de soupape (32) et le boîtier (23) et le deuxième ressort (39) est disposé entre le palier (30) supportant l'élément de guidage (34) et la bague de soupape (35).

7. Soupape de branchement de compresseur (17) selon la revendication 5, dans laquelle le premier ressort (38) est disposé entre le disque de soupape (32) et la bague de soupape (35) et le deuxième ressort (39) est disposé entre la bague de soupape (35) et le boîtier (23).

8. Soupape de branchement de compresseur (17) selon la revendication 5 ou 6, dans laquelle le premier ressort (38) présente une plus grande force de ressort que le deuxième ressort (39).

9. Soupape de branchement de compresseur (17) selon l'une quelconque des revendications 1 à 8, dans laquelle un mouvement du disque de soupape (32) provoque un mouvement de la bague de soupape (35).

10. Dispositif de suralimentation à registre (1) pour la compression d'air de suralimentation, qui est acheminé à un moteur à combustion interne (2), avec un premier étage de registre (4), qui présente un premier compresseur (6), et un deuxième étage de registre (5), qui présente un deuxième compresseur (20), le premier compresseur (6) et le deuxième compresseur (20) pouvant être sollicités avec de l'air de suralimentation parallèlement par le biais d'une conduite d'air de suralimentation (10), avec une conduite de dérivation (15), qui crée une connexion de guidage d'air entre un point de dérivation en aval de l'écoulement derrière le premier compresseur (6) et un point d'acheminement (29) monté en amont de l'écoulement avant le deuxième compresseur (20), une soupape de branchement de compresseur (17) selon l'une quelconque des revendications 1 à 9 pour ouvrir et fermer à la fois la conduite d'air de suralimentation (10) et la conduite de dérivation (15) étant disposée dans la région du point d'acheminement (29) dans la conduite d'air de suralimentation (10).
